(19) Europäisches Patentamt
European Patent Office
Office européen des brevets

(11) **EP 2 688 323 B1**

(12) **EUROPEAN PATENT SPECIFICATION**

(45) Date of publication and mention
of the grant of the patent:
**19.12.2018 Bulletin 2018/51**

(51) Int Cl.:
*H04W 4/24* (2018.01)        *H04M 1/725* (2006.01)
*H04L 12/14* (2006.01)        *H04M 15/00* (2006.01)

(21) Application number: **12801344.8**

(22) Date of filing: **15.03.2012**

(86) International application number:
**PCT/CN2012/072396**

(87) International publication number:
**WO 2012/171369 (20.12.2012 Gazette 2012/51)**

(54) **METHOD AND SYSTEM FOR CALCULATING CALL CHARGE OF TERMINAL**

VERFAHREN UND SYSTEM ZUR BERECHNUNG DER ANRUFGEBÜHREN EINES ENDGERÄTS

PROCÉDÉ ET SYSTÈME DE CALCUL DE FACTURE D'APPEL DE TERMINAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.06.2011  CN 201110158680**

(43) Date of publication of application:
**22.01.2014  Bulletin 2014/04**

(73) Proprietor: **ZTE Corporation**
**Shenzhen, Guangdong 518057 (CN)**

(72) Inventors:
• **FANG, Lijun**
**Shenzhen**
**Guangdong 518057 (CN)**
• **ZHANG, Jiani**
**Shenzhen**
**Guangdong 518057 (CN)**
• **WEN, Hailong**
**Shenzhen**
**Guangdong 518057 (CN)**

(74) Representative: **Modiano, Micaela Nadia et al**
**Modiano & Partners**
**Thierschstrasse 11**
**80538 München (DE)**

(56) References cited:
**EP-A1- 1 056 269        WO-A1-2006/000884
CN-A- 101 141 746        CN-A- 101 815 275
CN-A- 101 951 583        CN-A- 101 964 967**

**Description**

**TECHNICAL FIELD**

The present disclosure relates to the field of billing in a mobile communication system, and in particular to a method and system for calculating a call expense of a terminal.

**BACKGROUND**

A Subscriber Identity Module (SIM) is a smart card encapsulated in plastic, which has a microprocessor and is arranged to store information such as a billing rule. A terminal can be utilized in a mobile communication system only when an SIM card is installed in the terminal, and call expense information such as call expense and account balance is calculated using a billing rule in the SIM card of the terminal. Information such as the billing rule in the SIM card and the account balance is managed remotely by an Over-The-Air (OTA) control centre in the mobile communication system, which OTA control centre performs service interaction with the terminal in which the SIM card is located using an OTA short message.

At present, an way for acquiring the call expense information by the terminal is that: the terminal sends a call expense acquiring request to the OTA control centre by calling, sending a short message, or the like; after receiving the call expense acquiring request from the terminal, the OTA control centre searches for a recorded billing rule in the SIM card used in the terminal, calculates the call expense and the account balance, and finally compiles the call expense and the account balance as the call expense information to return to the terminal. When the terminal is in a roaming area, a roaming expense is generated when the call expense acquiring request is sent. It is clear that with such a way for acquiring the call expense information, the call expense and the account balance cannot be calculated by the terminal or the SIM card per se based on a billing rule of the OTA control centre, and the call expense information can be acquired only when the terminal initiates the request, failing to meet a requirement of a subscriber to acquire conveniently, in real time, the call expense information of the terminal in use.

To solve the above problem, two patent applications are filed at present:
One patent application, with the patent application number 201010545888.9, discloses a method and system for call billing of a mobile phone, wherein a call by a user is monitored by a mobile phone terminal, billing is implemented according to an attribute of an action in the call, and a report on the cost is displayed by the mobile phone terminal. The solution enables the user of the mobile phone to learn cost information generated by this call and helps the user view and understand the cost information; and since a billing rule is stored in the mobile phone terminal, it is possible to calculate in real time the cost generated by the current call without the need to wait till the end of the call; furthermore, it is possible to estimate a cost-per-minute for this call before dialling or answering the call, which enables the user to arrange the call usage reasonably according to his/her own situation. However, in this solution, the expense is calculated using the mobile phone terminal, while the billing should be implemented according to a billing rule in the SIM card; therefore, based on this solution, it is not possible to accurately know important information such as a user balance, to update the billing rule automatically after the billing rule is changed, or to notify the user of the latest information on the account balance after the user recharges the account; and the call expense calculated by the mobile phone terminal is inaccurate when the user is in a roaming state.

The other patent application, with the patent application number 200710176243.0, discloses a method and apparatus for implementing a call billing function of a mobile phone, wherein a recording module for recording an account balance is added in a SIM card of the mobile phone; the account balance in the recording module is modified according to a state parameter of a call of the mobile phone, the call of the mobile phone is allowed or disconnected according to the account balance. With this solution, call billing may be implemented using both the mobile phone and the SIM card jointly, and it is not required to process or save the billing information of a subscriber at a network side, which may save part of storage resources and processor resources of the network side, meet a requirement of a special customer such as a short-term visiting customer, and may further provide a value-added service for an operator or an agent. However, there is only one calculation method in this solution, namely, the call expense can only be calculated using both the terminal and the SIM card jointly; and the billing rule cannot be updated WO2006000884 discloses a method and a sytem according to which a SIM card is used for storing billing information comprising different billing rules for different billable events, each billing rule including billing parameters for the associated billable event. EP1056269 discloses a method and system of transmitting Advice of Charge (AoC) billing information from a billing entity to a billed terminal by means of an SMS.

It is clear that the above two solutions, although can meet the requirement of a subscriber/user to acquire conveniently, in real time, the call expense information of the terminal in use, either fail to calculate the call expense according to a billing rule provided by the SIM card and to update the billing rule, leading to an inaccurate calculated call expense; or have only one calculation method where the call expense can only be calculated using both the terminal and the SIM card jointly, and fail to update the billing rule. It is obvious that no existing solution for calculating the call expense of the terminal can meet the requirement of the subscriber/user to acquire accurately, in real time, the call expense of the terminal.

**SUMMARY**

In view of the above, a purpose of the overview is to provide a method and system for calculating a call expense of a terminal, so as to accurately acquire call expense information in real time.

To achieve the above purpose, the technical solution of the present disclosure is implemented as follows.

The present disclosure provides a method for calculating a call expense of a terminal, the method including: after receiving, by a cost calculating module, a call attribute, reading, by the cost calculating module, a billing rule and an account balance in a cost file, calculating, by the cost calculating module, a call expense and a current account balance, and then updating, by the cost calculating module, the account balance in the cost file; and updating the billing rule and/or the account balance in the cost file in time through an Over-The-Air (OTA) short message.

In the above solution, the cost file is a file in which current multiple optional billing rules and the current account balance are stored, wherein the billing rules are formulae for cost calculation established by using a call type and a roaming state as parameters.

In the above solution, the calculating, by the cost calculating module, a call expense and a current account balance may include:

searching, by the cost calculating module, billing rules in the cost file for a billing rule that corresponds to a call type and a roaming indicator contained in the call attribute; and

when an appropriate billing rule is found, then calculating, by the cost calculating module, the call expense and the current account balance using the appropriate billing rule; when no appropriate billing rule is found, then calculating, by the cost calculating module, the call expense and the current account balance using a default billing rule in the cost file.

In the above solution, the updating the billing rule and/or the account balance in the cost file in time through an OTA short message may include:
compiling, by an OTA control centre, a latest billing rule and/or a latest account balance into the OTA short message, and sending, by the OTA control centre, the OTA short message to a terminal that uses a Subscriber Identity Module (SIM) card; forwarding, by the terminal, the received OTA short message to the SIM card; and updating, by the SIM card, the billing rule and/or the account balance in the cost file according to the OTA short message, and saving, by the SIM card, the cost file.

The present disclosure also provides a system for calculating a call expense of a terminal, the system including a cost calculating module, a SIM card cost file module, and a SIM card SIM Tool Kit (STK) module, wherein the cost calculating module is configured to: after receiving call attribute information, read a billing rule and an account balance in a cost file from the SIM card cost file module, to calculate a call expense and a current account balance, then to update the cost file, and to send the updated cost file to the SIM card cost file module; wherein the SIM card cost file module is configured to provide the cost file to the cost calculating module and the SIM card STK module, and to receive and save the updated cost file sent by the cost calculating module and the SIM card STK module; and wherein the SIM card STK module is configured to acquire the cost file from the SIM card cost file module, to update the cost file according to an Over-The-Air (OTA) short message, and to send the updated cost file to the SIM card cost file module.

In the above solution, the cost file is a file in which current multiple optional billing rules and the current account balance are stored, wherein the billing rules are formulae for cost calculation established by using a call type and a roaming state as parameters.

In the above solution, the system may further include:

a terminal call recording module configured to send the call attribute information to the cost calculating module, wherein

accordingly, the cost calculating module may also be configured to receive the call attribute information from the terminal call recording module.

In the above solution, the system may further include:

a terminal cost reading module configured to receive and display the call expense and the current account balance sent by the cost calculating module, wherein

accordingly, the cost calculating module may also be configured to send the call expense and the current account balance to the terminal cost reading module.

In the above solution, the system may further include:

a network side OTA module configured to send a latest billing rule and a latest account balance to a terminal STK module by way of the OTA short message when there is a billing-rule change, and/or when there is an account-balance change due to account-recharging by a subscriber; and

the terminal STK module configured to receive the OTA short message from the network side OTA module, and to send the OTA short message to the SIM card STK module, wherein

accordingly, the SIM card STK module may also be configured to receive the OTA short message from the terminal STK module, then to read the cost file from the SIM card cost file module, to extract content of the OTA short message to update the billing rule and/or the account balance in the cost file to the latest billing rule and/or the latest account balance, and then to send the updated cost file to the SIM card cost file module; and

accordingly, the SIM card cost file module may also be configured to send the cost file to the SIM card STK module, and to receive and save the updated cost file from the SIM card STK module.

In the above solution, the SIM card cost file module and the SIM card STK module may be located in a SIM card; the terminal call recording module, the terminal cost reading module, and the terminal STK module may be located in a terminal;
the network side OTA module may be located in an OTA control centre; and
the cost calculating module may be located in the SIM card and/or in the terminal.
The method and system for calculating a call expense of a terminal provided by the present disclosure provides multiple billing rules and/or an account balance that may be updated in real time, meeting the requirement of a subscriber/user to acquire accurately, in real time, the call expense information of the terminal; in addition, the present disclosure also provides a flexible calculating way, such that the subscriber may choose to calculate the call expense flexibly using the terminal or the SIM card according to a practical requirement.

## BRIEF DESCRIPTION OF THE DRAWINGS

Fig. 1 is a flow chart of a method for calculating a call expense of a terminal according to the present disclosure;

Fig. 2 is a schematic diagram of a format of a cost file of the present disclosure; and

Fig. 3 is a schematic diagram of a structure of a system for calculating a call expense of a terminal according to the present disclosure.

## DETAILED DESCRIPTION

According to various embodiments, after receiving a call attribute, a cost calculating module reads a billing rule and an account balance in a cost file, calculates a call expense and a current account balance, and then updates the account balance in the cost file; and the billing rule and the account balance in the cost file are updated in time through an OTA short message;
Wherein, the cost calculating module refers to a module bearing a program dedicated to reading the cost file and calculating the call expense and the current account balance utilizing the billing rule and the account balance in the cost file, and is installed in a terminal or a SIM card;
The cost file refers to a file in which current multiple optional billing rules and the current account balance are stored, and is stored in the SIM card; wherein, the billing rules are updated in time via the OTA short message, while the account balance will be updated each time a call is completed, and will also be updated via the OTA short message.
The present disclosure is further elaborated below with reference to accompanying drawings and specific embodiments.

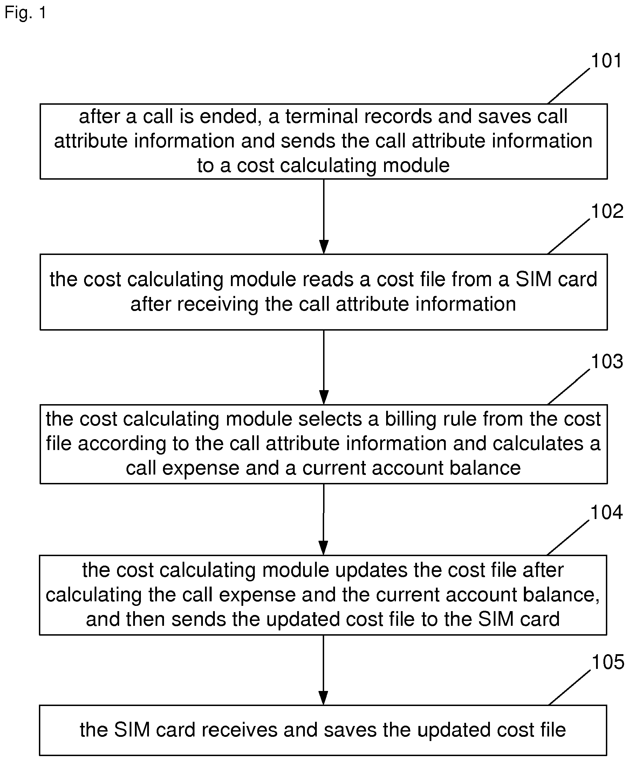

As shown in Fig. 1, a method for calculating a call expense of a terminal according to the present disclosure includes the following steps:

Step 101: after a call is ended, a terminal records and saves call attribute information, and sends the call attribute information to a cost calculating module.

Here, the call attribute information includes an instruction header, a call duration, a call type, and a roaming indicator; the instruction header refers to an information type identifier such as a call attribute information identifier; the call type refers to a voice call, a short message, or internet browsing; and the roaming indicator refers to that a terminal roaming is an intra-province/intra-state roaming, a domestic roaming, or an international roaming.

Step 101 further includes that: after the call is ended, the terminal records and saves the call attribute information; if the cost calculating module is located in a SIM card, then the terminal sends the call attribute information to the cost calculating module in the SIM card, and then step 102 is performed; if the cost calculating module is located in the terminal, then the terminal directly hands the call attribute information to the cost calculating module, and then step 102 is performed.

Step 102: the cost calculating module reads a cost file from the SIM card after receiving the call attribute information.

Step 103: the cost calculating module selects a billing rule from the cost file according to the call attribute information, and calculates a call expense and a current account balance using the selected billing rule.

Here, the billing rule refers to a formula for cost calculation established by using a call type and a roaming state as parameters.

Step 103 specifically includes that: the cost calculating module examines each billing rule in the cost file one by one to search for a billing rule that corresponds to the call type and a roaming indicator in the call attribute information, if an appropriate billing rule is found, then the cost calculating module calculates the call expense and the current account balance using the appropriate billing rule; if no appropriate billing rule is found, then the cost calculating module calculates the call expense and the current account balance using a default billing rule in the cost file.

Wherein the call expense is calculated specifically through the following formula in the cost calculating module:

$$\text{call expense} = \text{RuleX (type, roaming)} \times \text{time,}$$

or

$$\text{call expense} = \text{RuleDefault (type, roaming)} \times \text{time,}$$

wherein the RuleX is the selected billing rule, the RuleDefault is the default billing rule, the time is the call duration, the type is the call type, and the roaming is the roaming indicator.

The current account balance is calculated by the cost calculating module through the following formula:

current account balance=original account balance - call expense,

wherein the original account balance is an account balance in the cost file read from the SIM card in the step 102.

Step 104: the cost calculating module updates the cost file after calculating the call expense and the current account balance, and then sends the updated cost file to the SIM card.

Here, updating the cost file refers to updating the account balance in the cost file to a latest account balance.

Step 105: the SIM card receives and saves the updated cost file.

The above are steps of implementing the method for calculating the call expense of the terminal.

In addition, after the step 103 is completed, the terminal will also display the call expense and the current account balance, which may be performed simultaneously with the step 104, or may also be performed before or after the step 104;

Displaying the call expense and the current account balance is that: if the cost calculating module is located in the SIM card, then after the cost calculating module sends the call expense and the current account balance to the terminal, the terminal displays call expense information such as the current account balance and the call expense; if the cost calculating module is located in the terminal, then the terminal directly displays information such as the call expense and the current account balance calculated by the cost calculating module. In this way, a subscriber may acquire conveniently the latest account balance and call expense from the terminal in time.

During the above steps, the cost file may also be updated when there is a billing-rule change, and/or when there is an account-balance change; the updating refers to updating the cost file according to an OTA short message sent by an OTA control centre, with the specific steps of:

Step a: the OTA control centre compiles a latest billing rule and a latest account balance into the OTA short message, and sends the OTA short message to the terminal that uses the SIM card;

Here, the OTA short message containing the latest billing rule and the latest account balance includes: an identifier bit, a file name, and a short message content; wherein the identifier bit identifies a destination of the OTA short message, for example, an OTA message sent to the SIM card or to the terminal, the file name refers to a code of the content sent by the OTA short message, for example, the code for a billing-rule-and-account-balance file is "6F8A"; Regarding to the OTA short message, as long as one of a billing rule and the account balance is changed, the OTA control centre will compile a current billing rule and the current account balance into the OTA short message and send the OTA short message to the terminal.

Step b: the terminal forwards the received OTA short message to the SIM card;

Specifically, after receiving the OTA short message, the terminal determines whether the short message is to be sent to the SIM card or to the terminal according to the identifier bit of the OTA short message; if the short message is to be sent to the SIM card, then the terminal forwards the OTA short message to the SIM card; if the short message is meant to be sent to the terminal, then the terminal keeps the short message for further processing.

Step c: the SIM card updates a billing rule and the account balance in the cost file to a latest billing rule and the latest account balance according to the OTA short message, and then saves the cost file.

Specifically, after receiving the OTA short message, the SIM card extracts the file name in the OTA short message, identifies the file name to be that of the billing-rule-and-account-balance file, and then extracts the OTA short message content, fills the OTA short message content in a field content of the cost file in the SIM card, and then saves the cost file;

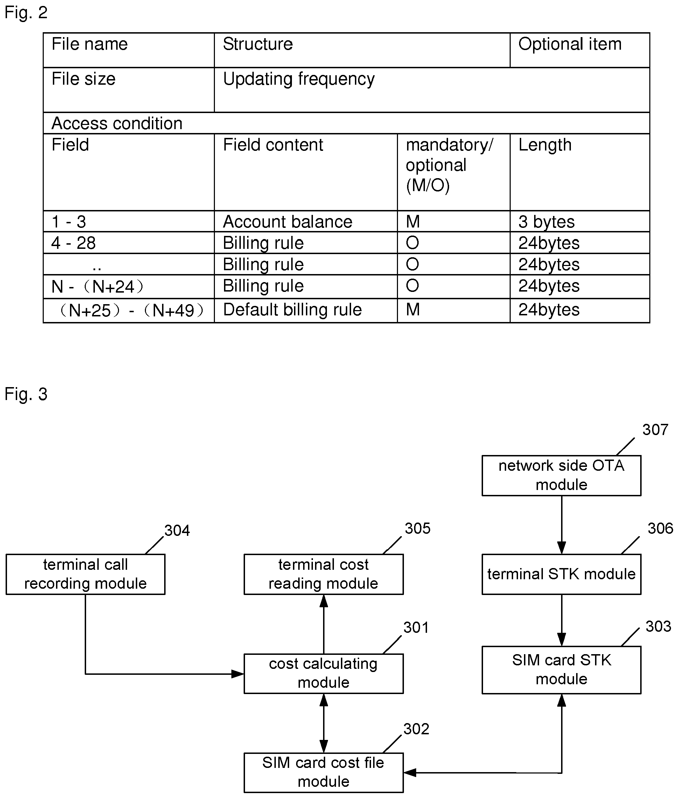

The format of the cost file, as shown in Fig. 2, is a prescribed format of a file in the SIM card, in which the file name is the code of the file, the structure is a structure of the file which may be a result of such as a transparent read or a read by inputting a PIN code, the optional item shows that the present file is an optional file, the access authorization is a restriction on an access level of the file, the field, field content, and the length show the specific content saved in the file and the field where the specific content is located, the M/O is a mandatory/optional identifier bit; the cost file differs from another file in the SIM card by the file name, the field, the field content, and the length, wherein the file name is identified using a code such as "6F8A", the field content is extracted from the OTA short message content in the OTA short message and is filled in the corresponding field.

In this way, it is possible to ensure that a latest billing rule and the latest account balance are saved in the cost file, such that the call expense and the current account balance can be calculated accurately.

As shown in Fig. 3, a system for calculating a call expense of a terminal according to the present disclosure includes a cost calculating module 301, a SIM card cost file module 302, and a SIM card STK (SIM Tool Kit) module 303.

The cost calculating module 301 is configured to: after receiving call attribute information, read a billing rule and an account balance in a cost file from the SIM card cost file module 302 to calculate a call expense and a current account balance, then to update the cost file, and to send the updated cost file to the SIM card cost file module 302;

Here, the cost file refers to a file configured to describe a current billing rule and the call expense, and specifically includes the call expense and multiple optional billing rules; the billing rules refer to formulae for cost calculation established by using a call type and a roaming state as parameters.

The SIM card cost file module 302 is configured to provide the cost file to the cost calculating module 301 and the SIM card STK module 303, and to receive and save the updated cost file sent by the SIM card cost file module 302 and the SIM card STK module 303.

The SIM card STK module 303 is configured to acquire the cost file from the SIM card cost file module 302, to update the cost file according to an OTA short message, and then to send the updated cost file to the SIM card cost file module 302.

Specifically, the cost calculating module 301 is a module for bearing a program specially configured to read the cost file and calculate the call expense and the current account balance utilizing the billing rule and the account balance in the cost file.

The cost calculating module 301 is configured to examine each billing rule in the cost file one by one to search for a billing rule that corresponds to the call type and a roaming indicator in the call attribute information, if an appropriate billing rule is found, then the cost calculating module 301 calculates the call expense and the current account balance using the appropriate billing rule found; if there is no appropriate billing rule in the cost file, then the cost calculating module 301 calculates the call expense and the current account balance using a default billing rule in the cost file.

The call expense is calculated specifically through the following formula in the cost calculating module:

$$\text{call expense}= \text{RuleX (type, roaming)} \times \text{ time,}$$

or

$$\text{call expense}=\text{RuleDefault (type, roaming)} \times \text{ time,}$$

wherein the RuleX is the selected billing rule, the RuleDefault is the default billing rule, the time is a call duration, the type is the call type, and the roaming is the roaming indicator;

The current account balance is calculated by the cost calculating module through the following formula:

$$\text{current account balance}=\text{original account balance - call expense,}$$

wherein the original account balance is the account balance in the cost file read from the SIM card cost file module 302.

The system also includes a terminal call recording module 304, configured to record and save the call attribute of each call, to compile the call attribute into call attribute information, and to send the call attribute information to the cost calculating module 301; accordingly, the cost calculating module 301 is also configured to receive the call attribute information from the terminal call recording module 304;

Wherein, the call attribute information includes an instruction header, a call duration, a call type, and a roaming indicator; the instruction header refers to an information type identifier such as a call attribute information identifier; the call type refers to a voice call, a short message, or internet browsing; and the roaming indicator refers to that a terminal roaming is an intra-province/intra-state roaming, a domestic roaming, or an international roaming.

The system also includes a network side OTA module 307 and a terminal STK module 306;

The network side OTA module 307 is configured to send a billing rule and the account balance to a terminal STK module 306 by way of the OTA short message when there is a billing-rule change related to the SIM card, and/or when there is an account-balance change related to the SIM card due to account-recharging by a subscriber;

The terminal STK module 306 is configured to receive the OTA short message from the network side OTA module 307, and to extract the identifier bit of the OTA short message; if the short message is to be sent to the SIM card according to the identifier bit of the short message, then the terminal STK module 306 is configured to send the OTA short message to the SIM card STK module 303; if the short message is to be sent to the terminal according to the identifier bit of the short message, then the terminal STK module 306 leaves the short message in the terminal for further processing;

Accordingly, the SIM card STK module 303 is configured to receive the OTA short message from the terminal STK module 306; then to extract a file name in the OTA short message, and to identify the file name to be billing-rule-and-account-balance; and then to read the cost file from the SIM card cost file module 302, to extract content of the OTA short message to update the billing rule and the account balance in the cost file to the latest billing rule and the latest account balance, and then to send the updated cost file to the SIM card cost file module 302; and accordingly, the SIM card cost file module 302 is also configured to send the cost file to the SIM card STK module 303, and to receive and save the updated cost file from the SIM card STK module 303;

Wherein, the OTA short message containing the latest billing rule and the latest account balance includes: an identifier bit, a file name, and a short message content, wherein the identifier bit refers to a type of the OTA short message, for example, an OTA message sent to the SIM card, and the file name refers to a code of the content sent by the OTA short message, for example, the code for a billing-rule-and-account-balance file is "6F8A".

The SIM card STK module 303 reads the OTA short message and updates the cost file through an installed STK.

The terminal STK module 306 reads the OTA short message through an installed STK.

The system also includes a terminal cost reading module 305 configured to receive and display the call expense and the current account balance sent by the cost calculating module 301; accordingly, the cost calculating module 301 is also configured to send the call expense and the current account balance to the terminal cost reading module 305.

In a practical application, the SIM card cost file module 302 and the SIM card STK module 303 in the above system are located in the SIM card, the terminal call recording module 304, the terminal cost reading module 305 and the terminal STK module 306 are located in the terminal, the cost calculating module 301 may be located in the SIM card or in the terminal, or may also be installed in both the SIM card and the terminal, and the network side OTA module

307 is located in the OTA control centre. In this way, an installation location may be selected flexibly for the cost calculating module 301 according to a practical application, such that the system can calculate the call expense using the terminal or the SIM card.

It is clear that with the above solution, multiple billing rules may be provided, and the billing rules and/or the account balance can be updated in time, enabling accurate calculation of the call expense and the account balance and improving experience of the subscriber in use.

What described are merely preferred embodiments of the present disclosure, and are not intended to limit the protection scope of the present disclosure, which is defined by the appended claims.

**Claims**

1. A method for calculating a call expense of a terminal, comprising:

    after receiving, by a cost calculating module (301), a call attribute, reading, by the cost calculating module (301), a billing rule and an account balance in a cost file (102), calculating, by the cost calculating module (301), a call expense and a current account balance, and then updating, by the cost calculating module (301), the account balance in the cost file (104); and updating the billing rule and/or the account balance in the cost file in time through an Over-The-Air, OTA, short message,
    wherein the cost file is stored in a Subscriber Identity Module, SIM, card used by the terminal,
    wherein the cost calculating module (301) is located in the SIM card and/or in the terminal,
    wherein the calculating, by the cost calculating module (301), a call expense and a current account balance comprises: searching, by the cost calculating module (301), billing rules in the cost file for a billing rule that corresponds to a call type and a roaming indicator contained in the call attribute; and when an appropriate billing rule is found, calculating, by the cost calculating module (301), the call expense and the current account balance using the appropriate billing rule found (103),
    wherein the current account balance is calculated by the cost calculating module (301) as: current account balance = original account balance - call expense, wherein the original account balance is an account balance in the cost file read from the SIM card,
    wherein the updating the billing rule and/or the account balance in the cost file in time through an OTA short message comprises:
    when there is a billing-rule change, and/or when there is an account-balance change due to account-recharging by a subscriber, compiling, by an OTA control centre, a latest billing rule and/or a latest account balance into the OTA short message, and sending, by the OTA control centre, the OTA short message to the terminal that uses the SIM card; forwarding, by the terminal, the received OTA short message to the SIM card; and updating, by the SIM card, the billing rule and/or the account balance in the cost file according to the OTA short message, and saving, by the SIM card, the cost file.

2. The method according to claim 1, wherein the cost file is a file in which current multiple optional billing rules and the current account balance are stored, wherein the billing rules are formulae for cost calculation established by using a call type and a roaming state as parameters.

3. The method according to claim 1, wherein the calculating, by the cost calculating module (301), a call expense and a current account balance comprises:
    when no appropriate billing rule is found, then calculating, by the cost calculating module (301), the call expense and the current account balance using a default billing rule in the cost file.

4. A system for calculating a call expense of a terminal, comprising a cost calculating module (301), a, Subscriber Identity Module, SIM card cost file module (302), and a SIM card SIM Tool Kit, STK, module (303),
    wherein the cost calculating module (301) is configured to: after receiving call attribute information, read a billing rule and an account balance in a cost file from the SIM card cost file module (302), to calculate a call expense and a current account balance, then to update the account balance in the cost file, and to send the updated cost file to the SIM card cost file module (302),
    wherein the SIM card cost file module (302) is configured to provide the cost file to the cost calculating module (301) and the SIM card STK module (303), and to receive and save the updated cost file sent by the cost calculating module (301) and the SIM card STK module (303), and
    wherein the SIM card STK module (303) is configured to acquire the cost file from the SIM card cost file module (302), to update the billing rule and/or the account balance in the cost file according to an Over-The-Air, OTA, short message, and to send the updated cost file to the SIM card cost file module (302),
wherein the cost calculating module (301) is configured to examine each billing rule in the cost file one by one to search for a billing rule that corresponds to a call type and a roaming indicator in the call attribute information; and when an appropriate billing rule is found, the cost calculating module (301) calculates the call expense and the current account balance using the appropriate billing rule found,
wherein the current account balance is calculated by the cost calculating module (301) as: current account balance = original account balance - call expense, wherein the original account balance is an account balance in the cost file read from a Subscriber Identity Module (SIM) card used by the terminal,
wherein the system further comprises a network side OTA module (307) and a terminal STK module (306),
wherein the network side OTA module (307) is configured to send a latest billing rule and a latest account balance to the terminal STK module (306) by way of the OTA short message when there is a billing-rule change, and/or when there is an account-balance change due to account-recharging by a subscriber,
wherein the terminal STK module (306) is configured to receive the OTA short message from the network side OTA module (307), and to send the OTA short message to the SIM card STK module (303),
wherein the SIM card STK module (303) is configured to receive the OTA short message from the terminal STK module (306), then to read the cost file from the SIM card cost file module (302), to extract content of the OTA short message to update the billing rule and/or the account balance in the cost file to the latest billing rule and/or the latest account balance, and then to send the updated cost file to the SIM card cost file module (302),
wherein the SIM card cost file module (302) and the SIM card STK module (303) are located in the SIM card;
wherein the network side OTA module (307) is located in an OTA control centre,
wherein the cost calculating module (301) is located in the SIM card and/or in the terminal.

5. The system according to claim 4, wherein the cost file is a file in which current multiple optional billing rules and the current account balance are stored, wherein the billing rules are formulae for cost calculation established by using a call type and a roaming state as parameters.

6. The system according to claim 4, further comprising:

   a terminal call recording module (304) configured to send the call attribute information to the cost calculating module (301),
   wherein the cost calculating module (301) is configured to receive the call attribute information from the terminal call recording module (304).

7. The system according to claim 4, further comprising:

   a terminal cost reading module (305) configured to receive and display the call expense and the current account balance sent by the cost calculating module (301),
   wherein the cost calculating module (301) is configured to send the call expense and the current account balance to the terminal cost reading module (305).

8. The system according to claim 6 or 7, wherein
the terminal call recording module (304) or the terminal cost reading module (305) is located in the terminal.

**Patentansprüche**

1. Ein Verfahren zum Berechnen einer Anrufgebühr eines Endgeräts, Folgendes umfassend:

   nach dem Empfangen eines Anrufattributs durch ein Kostenberechnungsmodul (301), das Auslesen, durch das Kostenberechnungsmodul (301), einer Abrechnungsregel und eines Saldos in einer Kostendatei (102), das Berechnen, durch das Kostenberechnungsmodul (301), einer Anrufgebühr und eines aktuellen Saldos, und anschließend das Aktualisieren, durch das Kostenberechnungsmodul (301), des Saldos in der Kostendatei (104); und das Aktualisieren der Abrechnungsregel und/oder des Saldos in der Kostendatei in der Zeit durch eine Over-The-Air-, OTA-,Kurznachricht,
   wobei die Kostendatei in einer Subscriber Identity Module-, SIM-,Karte gespeichert ist, die vom Endgerät verwendet wird, wobei das Kostenberechnungsmodul (301) sich in der SIM-Karte und/oder im Endgerät befindet, wobei das Berechnen, durch das Kostenberechnungsmodul (301), einer Anrufgebühr und eines aktuellen Saldos Folgendes umfasst: das Durchsuchen, durch das Kostenberechnungsmodul (301), von Abrechnungsregeln in der Kostendatei nach einer Abrechnungsregel, die einem Anruftyp entspricht, und nach einer im Anrufattribut enthaltenen Roaming-Kennung; und, wenn eine passende Abrechnungsregel gefunden ist, das Berechnen, durch das Kostenberechnungsmodul (301), der Anrufgebühr und das aktuellen Saldos mit Hilfe der geeigneten gefundenen Abrechnungsregel (103), wobei der aktuelle Saldo vom Kostenberechnungsmodul (301) wie folgt berechnet wird:

aktueller Saldo = ursprünglicher Saldo - Anrufgebühr, wobei der ursprüngliche Saldo ein Saldo in der Kostendatei ist, der aus der SIM-Karte ausgelesen wird, wobei die Aktualisierung der Abrechnungsregel und/oder des Saldos in der Kostendatei in der Zeit durch eine OTA-Kurznachricht Folgendes umfasst: wenn eine Änderung der Abrechnungsregel und/oder eine Änderung des Saldos aufgrund einer Neuaufladung des Kontos durch einen Teilnehmer stattfindet, das Kompilieren, durch eine OTA-Zentrale, einer neuesten Abrechnungsregel und/oder eines neuesten Saldos in die OTA-Kurznachricht, und das Senden, durch die OTA-Zentrale, der OTA-Kurznachricht an das Endgerät, das die SIM-Karte verwendet; das Weiterleiten, durch das Endgerät, der empfangenen OTA-Kurznachricht an die SIM-Karte; und das Aktualisieren, durch die SIM-Karte, der Abrechnungsregel und/oder des Saldos in der Kostendatei entsprechend der OTA-Kurznachricht; und das Speichern der Kostendatei durch die SIM-Karte.

2. Das Verfahren gemäß Anspruch 1, worin die Kostendatei eine Datei ist, in der aktuelle Mehrfachoptions-Abrechnungsregeln und der aktuelle Saldo gespeichert sind, wobei die Abrechnungsregeln Formeln zur Kostenberechnung sind, die unter Verwendung eines Anruftyps und eines Roaming-Status als Parameter erstellt werden.

3. Das Verfahren gemäß Anspruch 1, wobei die Berechnung, durch das Kostenberechnungsmodul (301), einer Anrufgebühr und eines aktuellen Saldos Folgendes umfasst: wenn keine geeignete Abrechnungsregel gefunden wird, das Berechnen, durch das Kostenberechnungsmodul (301), der Anrufgebühr und des aktuellen Saldos unter Verwendung einer Standard-Abrechnungsregel in der Kostendatei.

4. Ein System zur Berechnung einer Anrufgebühr eines Endgeräts, das Folgendes umfasst: ein Kostenberechnungsmodul (301), ein Subscriber Identity-Modul-, SIM-,Karten-Kostendateimodul (302) und ein SIM-Karten-Toolkit-, STK-,Modul (303), wobei das Kostenberechnungsmodul (301) konfiguriert ist, um: nach dem Empfang von Anrufattributinformationen, eine Abrechnungsregel und ein Saldo in einer Kostendatei aus dem SIM-Karten-Kostendateimodul (302) auszulesen, eine Anrufgebühr und einen aktuellen Saldo zu berechnen, dann den Saldo in der Kostendatei zu aktualisieren und die aktualisierte Kostendatei an das SIM-Karten-Kostendateimodul (302) zu senden, wobei das SIM-Karten-Kostendateimodul (302) konfiguriert ist, um die Kostendatei dem Kostenberechnungsmodul (301) und dem SIM-Karten-STK-Modul (303) zur Verfügung zu stellen und die aktualisierte Kostendatei zu empfangen und zu speichern, die vom Kostenberechnungsmodul (301) und vom SIM-Karten-STK-Modul (303) gesendet wird, und wobei das SIM-Karten-STK-Modul (303) konfiguriert ist, um die Kostendatei vom SIM-Karten-Kostendateimodul (302) zu erhalten, die Abrechnungsregel und/oder den Saldo in der Kostendatei entsprechend einer Over-The-Air-, OTA-Kurznachricht zu aktualisieren und die aktualisierte Kostendatei an das SIM-Karten-Kostendateimodul (302) zu senden, wobei das Kostenberechnungsmodul (301) konfiguriert ist, um jede Abrechnungsregel in der Kostendatei einzeln zu untersuchen, um nach einer Abrechnungsregel zu suchen, die einem Anruftyp und einer Roaming-Kennung in den Anrufattributinformationen entspricht; und, wenn eine geeignete Abrechnungsregel gefunden wird, das Kostenberechnungsmodul (301) die Anrufgebühr und den aktuellen Saldo mit Hilfe der gefundenen geeigneten Abrechnungsregel berechnet, wobei der aktuelle Saldo vom Kostenberechnungsmodul (301) wie folgt berechnet wird: aktueller Saldo = ursprünglicher Saldo - Anrufgebühr, wobei der ursprüngliche Saldo ein Saldo in der Kostendatei ist, der aus einer vom Endgerät benutzten Subscriber Identity Module-, SIM-,Karte ausgelesen wird, wobei das System weiter ein Netzwerkseiten-OTA-Modul (307) und ein Endgeräte-STK-Modul (306) umfasst, wobei das Netzwerkseiten-OTA-Modul (307) konfiguriert ist, um über die OTA-Kurznachricht eine neueste Abrechnungsregel und einen neuesten Saldo an das Endgeräte-STK-Modul (306) zu senden, wenn eine Änderung der Abrechnungsregel und/oder eine Saldenänderung aufgrund einer Neuaufladung des Kontos durch einen Teilnehmer stattfindet, wobei das Endgeräte-STK-Modul (306) konfiguriert ist, um die OTA-Kurznachricht vom Netzwerkseiten-OTA-Modul (307) zu empfangen und um die OTA-Kurznachricht an das SIM-Karten-STK-Modul (303) zu senden,

wobei das SIM-Karten-STK-Modul (303) konfiguriert ist, um die OTA-Kurznachricht vom Endgeräte-STK-Modul (306) zu empfangen, anschließend die Kostendatei aus dem SIM-Karten-Kostendateimodul (302) auszulesen, Inhalt aus der OTA-Kurznachricht zu extrahieren, um die Abrechnungsregel und/oder den Saldo in der Kostendatei auf die neueste Abrechnungsregel und/oder den neuesten Saldo zu aktualisieren, und dann die aktualisierte Kostendatei an das SIM-Karten-Kostendateimodul (302) zu senden,

wobei das SIM-Karten-Kostendateimodul (302) und das SIM-Karten-STK-Modul (303) sich in der SIM-Karte befinden;

wobei das Netzwerkseiten-OTA-Modul (307) sich in einer OTA-Zentrale befindet,

wobei das Kostenberechnungsmodul (301) sich in der SIM-Karte und/oder im Endgerät befindet.

5. Das System gemäß Anspruch 4, worin die Kostendatei eine Datei ist, in der aktuelle Mehrfachoptions-Abrechnungsregeln und der aktuelle Saldo gespeichert sind, wobei die Abrechnungsregeln Formeln zur Kostenberechnung sind, die unter Verwendung eines Anruftyps und eines Roaming-Status als Parameter erstellt werden.

6. Das System gemäß Anspruch 4, das weiter Folgendes umfasst:

ein Endgeräte-Anruferfassungsmodul (304), konfiguriert, um die Anrufattributinformationen an das Kostenberechnungsmodul (301) zu senden,

wobei das Kostenberechnungsmodul (301) konfiguriert ist, um die Anrufattributinformationen vom Endgeräte-Anruferfassungsmodul (304) zu empfangen.

7. Das System gemäß Anspruch 4, das weiter Folgendes umfasst:

ein Endgeräte-Kostenauslesemodul (305), konfiguriert, um die Anrufgebühr und den aktuellen Saldo zu empfangen und anzuzeigen, die vom Kostenberechnungsmodul (301) gesendet werden,

wobei das Kostenberechnungsmodul (301) konfiguriert ist, um die Anrufgebühr und den aktuellen Saldo an das Endgeräte-Kostenauslesemodul (305) zu senden.

8. Das System gemäß Anspruch 6 oder 7, worin
das Endgeräte-Anruferfassungsmodul (304) oder das Endgeräte-Kostenauslesemodul (305) sich im Endgerät befinden.

**Revendications**

1. Procédé de calcul de dépense d'appel d'un terminal, comprenant :

après réception, par un module de calcul de coût (301), d'un attribut d'appel, de lire, par le module de calcul de coût (301), une règle de facturation et un solde de compte dans un fichier de coût (102), de calculer, par le module de calcul de coût (301), une dépense d'appel et un solde de compte courant, et de mettre ensuite à jour, par le module de calcul de coût (301), le solde de compte dans le fichier de coût (104) ; et de mettre à jour la règle de facturation et/ou le solde de compte dans le fichier de coût à temps par un message court en liaison radio, OTA,

dans lequel le fichier de coût est stocké dans une carte de module d'identité d'abonné, SIM, utilisée par le terminal,

dans lequel le module de calcul de coût (301) est situé dans la carte SIM et/ou dans le terminal,

dans lequel le calcul, par le module de calcul de coût (301), d'une dépense d'appel et d'un solde de compte courant comprend : de chercher, par le module de calcul de coût (301), des règles de facturation dans le fichier de coût pour une règle de facturation qui correspond à un type d'appel et un indicateur d'itinérance contenu dans l'attribut d'appel ; et quand une règle de facturation appropriée est trouvée, de calculer, par le module de calcul de coût (301), la dépense d'appel et le solde de compte courant en utilisant la règle de facturation appropriée trouvée (103),

dans lequel le solde de compte courant est calculé par le module de calcul de coût (301) comme : solde de compte courant = solde de compte original - dépense d'appel, dans lequel le solde de compte original est un solde de compte dans le fichier de coût lu depuis la carte SIM,

dans lequel mettre à jour la règle de facturation et/ou le solde de compte dans le fichier de coût à temps par un message court OTA comprend :

quand il y a un changement de règle de facturation, et/ou quand il y a un changement de solde de compte du fait d'un rechargement de compte par un abonné, de compiler, par un centre de commande d'OTA, une règle de facturation la plus récente et/ou un solde de compte le plus récent dans le message court OTA, et d'envoyer, par le centre de commande d'OTA, le message court OTA au terminal qui utilise la carte SIM ; d'envoyer, par le terminal, le message court OTA reçu à la carte SIM ; et de mettre à jour, par la carte SIM, la règle de facturation et/ou le solde de compte dans le fichier de coût selon le message court OTA, et de sauvegarder, par la carte SIM, le fichier de coût.

2. Procédé selon la revendication 1, dans lequel le fichier de coût est un fichier dans lequel de multiples règles de facturation optionnelles courantes et le solde de compte courant sont stockés, dans lequel les règles de facturation sont des formules pour le calcul de coût établies en utilisant un type d'appel et un état d'itinérance comme paramètres.

3. Procédé selon la revendication 1, dans lequel le calcul, par le module de calcul de coût (301), d'une dépense d'appel et d'un solde de compte courant comprend :
quand aucune règle de facturation appropriée n'est trouvée, de calculer alors, par le module de calcul de coût (301), la dépense d'appel et le solde de compte en utilisant une règle de facturation par défaut dans le fichier de coût.

4. Système pour calculer une dépense d'appel d'un terminal, comprenant un module de calcul de coût (301), un module de fichier de coût de carte module d'identité d'abonné, SIM, (302), et un module, de boîte à outil de carte SIM, STK, de carte SIM (303),
dans lequel le module de calcul de coût (301) est configuré pour : après réception d'une information d'attribut d'appel, lire une règle de facturation et un solde de compte dans un fichier de coût venant du module de fichier de coût de carte SIM (302), calculer une dépense d'appel et un solde de compte courant, mettre ensuite à jour le solde de compte dans le fichier de coût ; et envoyer le fichier de coût mis à jour vers le module de fichier de coût de carte SIM (302),
dans lequel le module de fichier de coût de carte SIM (302) est configuré pour fournir le fichier de coût au module de calcul de coût (301) et au module STK de carte SIM (303), et pour recevoir et sauvegarder le fichier de coût mis à jour envoyé par le module de calcul de coût (301) et le module STK de carte SIM (303), et
dans lequel le module STK de carte SIM (303) est configuré pour acquérir le fichier de coût depuis le module de fichier de coût de carte SIM (302), pour mettre à jour la règle de facturation et/ou le solde de compte dans le fichier de coût selon un message court en liaison radio, OTA, et pour envoyer le fichier de coût mis à jour au module de fichier de coût de carte SIM (302),
dans lequel le module de calcul de coût (301) est configuré pour examiner chaque règle de facturation dans le fichier de coût une par une pour rechercher une règle de facturation qui correspond à un type d'appel et un indicateur d'itinérance dans l'information d'attribut d'appel ; et quand une règle de facturation appropriée est trouvée, le module de calcul de coût (301) calcule la dépense d'appel et le solde de compte courant en utilisant la règle de facturation appropriée trouvée,
dans lequel le solde de compte courant est calculé par le module de calcul de coût (301) comme : solde de compte courant = solde de compte original - dépense d'appel, dans lequel le solde de compte original est un solde de compte dans le fichier de coût lu depuis une carte de module d'identité d'abonné (SIM) utilisée par le terminal,
dans lequel le système comprend en outre un module OTA côté réseau (307) et un module STK de terminal (306),
dans lequel le module OTA côté réseau (307) est configuré pour envoyer une règle de facturation la plus récente et un solde de compte le plus récent au module STK de terminal (306) au moyen du message court OTA quand il y a un changement de règle de facturation, et/ou quand il y a un changement de solde de compte dû à un rechargement de compte par un abonné,
dans lequel le module STK de terminal (306) est configuré pour recevoir le message court OTA depuis le module OTA côté réseau (307), et pour envoyer le message court OTA au module STK de carte SIM (303),
dans lequel le module STK de carte SIM (303) est configuré pour recevoir le message court OTA depuis le module STK de terminal (306), puis lire le fichier de coût depuis le module de fichier de coût de carte SIM (302), extraire le contenu du message court OTA pour mettre à jour la règle de facturation et/ou le solde de compte dans le fichier de coût à la règle de facturation la plus récente et/ou le solde de compte le plus récent, et envoyer ensuite le fichier de coût mis à jour au module de fichier de coût de carte SIM (302),
dans lequel le module de fichier de coût de carte SIM (302) et le module STK de carte SIM (303) sont situés dans la carte SIM ;
dans lequel le module OTA côté réseau (307) est situé dans le centre de commande d'OTA,
dans lequel le module de calcul de coût (301) est situé dans la carte SIM et/ou dans le terminal.

5. Système selon la revendication 4, dans lequel le fichier de coût est un fichier dans lequel de multiples règles de facturation optionnelles courantes et le solde de compte courant sont stockés, dans lequel les règles de facturation sont des formules pour le calcul de coût établies en utilisant un type d'appel et un état d'itinérance comme paramètres.

6. Système selon la revendication 4, comprenant en outre :

   un module d'enregistrement d'appel de terminal (304) configuré pour envoyer l'information d'attribut d'appel au module de calcul de coût (301),
   dans lequel le module de calcul de coût (301) est configuré pour recevoir l'information d'attribut d'appel depuis le module d'enregistrement d'appel de terminal (304).

7. Système selon la revendication 4, comprenant en outre :

   un module de lecture de coût de terminal (305) configuré pour recevoir et afficher la dépense d'appel et le solde de compte courant envoyées par le module de calcul de coût (301),
   dans lequel le module de calcul de coût (301) est configuré pour envoyer la dépense d'appel et le solde de compte courant au module de lecture de coût de terminal (305).

8. Système selon la revendication 6 ou 7, dans lequel
   le module d'enregistrement d'appel de terminal (304) ou le module de lecture de coût de terminal (305) est situé dans le terminal.

Fig. 1

101

after a call is ended, a terminal records and saves call attribute information and sends the call attribute information to a cost calculating module

102

the cost calculating module reads a cost file from a SIM card after receiving the call attribute information

103

the cost calculating module selects a billing rule from the cost file according to the call attribute information and calculates a call expense and a current account balance

104

the cost calculating module updates the cost file after calculating the call expense and the current account balance, and then sends the updated cost file to the SIM card

105

the SIM card receives and saves the updated cost file

Fig. 2

| File name | Structure | | Optional item |
|---|---|---|---|
| File size | Updating frequency | | |
| Access condition | | | |
| Field | Field content | mandatory/ optional (M/O) | Length |
| 1 - 3 | Account balance | M | 3 bytes |
| 4 - 28 | Billing rule | O | 24bytes |
| .. | Billing rule | O | 24bytes |
| N - （N+24） | Billing rule | O | 24bytes |
| （N+25） - （N+49） | Default billing rule | M | 24bytes |

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 201010545888 A
- WO 200710176243 A
- WO 2006000884 A
- EP 1056269 A